# EUROPÄISCHE PATENTSCHRIFT

(11) **EP 1 003 601 B1**
(45) Veröffentlichungstag und Bekanntmachung des Hinweises auf die Patenterteilung: **20.11.2002**
(21) Anmeldenummer: 98941419.8
(22) Anmeldetag: 14.08.1998
(51) Int. Cl.: B01D 29/44, B01D 29/94

(54) **KANTENSPALTFILTER FÜR FLÜSSIGKEITEN**
SLOTTED EDGE-TYPE LIQUID FILTER
FILTRE A ARETES A DISCONTINUITE D'ABSORPTION DESTINE AUX LIQUIDES

(30) Priorität: 16.08.1997 DE 19735446
(43) Veröffentlichungstag der Anmeldung: 31.05.2000
(73) Patentinhaber: RUHR OEL GmbH, 45876 Gelsenkirchen (DE)
(72) Erfinder: PAUL, Jürgen, D-46284 Dorsten (DE); WICHMANN, Dietmar, D-46240 Bottrop (DE)
(74) Vertreter: Berg, Dirk, Dr.
(86) Internationale Anmeldenummer: EP9805162
(87) Internationale Veröffentlichungsnummer: WO99008772

(56) Entgegenhaltungen:
- EP-A- 0 553 438
- EP-A- 0 722 760
- DE-A- 3 842 608
- DE-A- 19 519 493
- PATENT ABSTRACTS OF JAPAN vol. 017, no. 452 (C-1099), 19. August 1993 & JP 05 103912 A (DAIWA KIKO KK), 27. April 1993

## Beschreibung

Die Erfindung betrifft einen Kantenspaltfilter zur Entfernung von Feststoffen aus Flüssigkeiten mit einem Filtergehäuse 1, in dem ein Kantenspaltfilterkörper 2 angeordnet ist, mindestens einem Eintrittsstutzen 3 und mindestens einem Austrittsstutzen 4, wobei an der Außenfläche oder Innenfläche des Kantenspaltfilterkörpers 2 ein Reinigungselement 6 angeordnet ist zur Entfernung von abgelagerten Verunreinigungen.

Kantenspaltfilter sind aus dem Stand der Technik bekannt. Diese Filter bestehen im allgemeinen aus einem Filtergehäuse, in das ein Kantenspaltfilterkörper eingesetzt wird. Der Kantenspaltfilterkörper kann verschiedene Maschenweiten besitzen, die je nach den für die Filtrierung gewünschten Bedingungen gewählt werden kann. Das zu filtrierende Medium wird über einen Eintrittsstutzen von außen oder innen auf den Kantenspaltfilterkörper geführt, dort filtriert, wobei auf der Innenseite oder Außenseite dann die filtrierte Flüssigkeit über einen entsprechenden Austrittsstutzen aus dem Kantenspaltfilterkörper abgeleitet wird. Die Verunreinigungen scheiden sich dabei an der Außen- oder Innenseite des Kantenspaltfilterkörpers ab. Über die äußere Oberfläche des Kantenspaltfilterkörpers wird bei Bedarf ein Reinigungselement geführt, das die Verunreinigungen von der Außen- oder Innenseite abschabt. Diese fallen dann in den unteren Teil des Filtergehäuses. Im allgemeinen werden die Kantenspaltfilter auch drehbar ausgerüstet. Der Kantenspaltfilterkörper ist dann um seine Längsachse drehbar und der Schaber an einer definierten Stelle im Filtergehäuse angeordnet. Alternativ kann auch der Kantenspaltfilterkörper fest und der Schaber um den Kantenspaltfilter drehbar angeordnet sein. Durch Drehen des Kantenspaltfilterkörpers bzw. des Schabens wird die Außenseite oder die Innenseite gereinigt, wobei die Verunreinigungen nach unten abfallen.

Diese Reinigung kann manuell gesteuert werden; es sind jedoch auch automatische Steuerungen bekannt. Als Funktionsprinzip liegt der automatischen Steuerung zugrunde, daß es bei zunehmender Abscheidung von Verunreinigungen auf der Filteroberfläche zu einem erhöhten Druckunterschied zwischen der Außenseite des Kantenspaltfilterkörpers und der Innenseite des Kantenspaltfilterkörpers kommt. Bei einem bestimmten Druckunterschied wird dann die Reinigungsanlage des Kantenspaltfilters eingeschaltet, wobei entweder ein Reinigungselement um die Außenseite des Kantenspaltfilterkörpers rotiert und die Verunreinigungen abschabt oder der Kantenspaltfilterkörper selbst um seine Längsachse gedreht wird, wobei dann das Reinigungselement fest im Filtergehäuse angeordnet ist. Auf diese Art und Weise wird die Außenseite oder Innenseite des Kantenspaltfilterkörpers abgeschabt und gereinigt. Der Druckunterschied vermindert sich wieder und der Reinigungsprozeß wird so wieder unterbrochen, bis der Druckunterschied wieder höher wird. Die Verunreinigungen fallen in den unteren Teil des Filtergehäuses.

Derartige Filter werden vorwiegend zur Reinigung von Flüssigkeiten hoher oder niedriger Viskosität in laufenden industriellen Prozessen eingesetzt. Die Filtersysteme besitzen hohe Zuverlässigkeit und können auch einen hohen Anfall von Verunreinigungen verarbeiten. Sie können als Eintritts- oder Austrittsfilter, als Vorfilter, Sicherheitsfilter oder Produktfilter eingesetzt werden. Es können verschiedene Medien filtriert werden. Hierzu gehören Öle, Fette, Farben, Lebensmittelprodukte, Wasser, Schmieröle, flüssige Kühlmittel und Chemikalien.

Die EP 0 722 760 A1 beschreibt einen herkömmlichen Kantenspaltfilter für Flüssigkeiten. Dieser Kantenspaltfilter besteht aus einem kreiszylindrischen Filtergehäuse, dessen unterer Teil sich konisch zu einem Auslaß für abgeschiedene Verunreinigungen verengt. Beim Abschaben des Kantenspaltfilterkörpers mit dem Reinigungselement fallen die Verunreinigungen in den unteren Teil des Filtergehäuses und können durch den Auslaß 9 entsorgt werden.

Eine derartige Anordnung besitzt jedoch den Nachteil, daß es häufig aufgrund des nur geringen Auffangvolumens des unteren Teils des Filtergehäuses zu Anbackungen der Verunreinigungen kommt und diese daher nur sehr schlecht entfernt werden können. Durch die nur kleine Öffnung 9 ist der Filter gemäß der EP-A-0 722 760 zur Reinigung auch nur schlecht zugänglich. Weiterhin ist darauf zu achten, daß die Menge an Verunreinigungen im unteren Teil des Filtergehäuses nicht bis zum Kantenspaltfilterkörper ansteigen darf, da sonst die Funktion des gesamten Filters nicht mehr gewährleistet ist. Dies führt zu geringen Standzeiten derartiger Filtersysteme.

Im Stand der Technik werden bisher Siebkorbfilter zur Abscheidung von Feststoffen aus Flüssigkeiten eingesetzt. Diese haben den Nachteil, daß sie in aufwendiger Weise gereinigt werden müssen. Beim Einsatz in Produktionsanlagen ist u. U. zur Durchführung der Reinigung die gesamte Anlage abzuschalten, was einen zusätzlichen Nachteil darstellt.

EP-A-0 553 438 offenbart ein Verfahren zum Filtrieren einer Flüssigkeit sowie einer Vorrichtung zur Durchführung des Verfahrens. Diese Vorrichtung weist auch einen Filter (7) aus, der jedoch in der Beschreibung nicht näher konkretisiert wird. Der untere Teil des Filtergehäuses läuft konisch zu, bevor es in einen kugelförmigen Auffangbehälter mündet, der an mindestens einem Ende eine Entleerungsöffnung aufweist, wobei vor dem Retentatabfluß ein Sieb angeordnet ist. Eine Reinigung des Filters ist nur mit großem Aufwand möglich, da der gesamte Behälter demontiert werden muß. Desweiteren ist die konische Verengung des Filtergehäuses unvorteilhaft, da es an Verengungen immer zu Verstopfungen kommen kann.

Die technische Aufgabe der Erfindung war es daher, einen Kantenspaltfilter mit modifizierter Reinigung zur Verfügung zu stellen, der die oben beschriebenen Nachteile nicht aufweist und insbesondere bei Produktionsanlagen mit hohem Druck und hohen Temperaturen längere Standzeiten und eine einfachere Entsorgung der Verunreinigung ermöglicht.

Diese technische Aufgabe wurde gelöst durch einen Kantenspaltfilter gemäß Anspruch 1.

Durch eine derartige Anordnung wird die konische Formung des unteren Teils des Filtergehäuses vermieden. Die Verunreinigungen können aufgrund des geraden Verlaufs des Filtergehäuses ohne Gefahr von Anbackungen oder Verstopfungen in das querliegende Rohr sedimentieren, wo sie dann bei Bedarf über die Entleerungsöffnungen 8 entsorgt werden können. Das im Behälter 7 über dem Slop 9 angeordnete Sieb 10 trennt die Feststoffe von der flüssigen Phase, so daß nur die Feststoffe im Behälter 7 zurückbleiben.

In einer bevorzugten Ausführungsform ist über dem Slop 9 ein Sieb 10 angeordnet, das dieselbe Maschenweite oder eine feinere Maschenweite besitzt, wie der Kantenspaltfilterkörper 2. Hierdurch wird erreicht, daß der Slop 9 nicht durch die vom Kantenspaltfilter 2 abgeschabten Verunreinigungen verstopft wird.

Es ist weiterhin bevorzugt, daß das Sieb 10 demontierbar in dem Behälter 7 angeordnet ist. So kann das Sieb 10 auf Führungsschienen gelagert sein. Diese Ausführungsform hat den Vorteil, daß die auf dem Sieb abgelagerten Festkörper nach Öffnen des Behälters 7 nicht mühsam und manuell herausgeschabt werden müssen, sondern daß das gesamte Sieb 10 beispielsweise mit Hilfe eines Gabelstaplers aus dem Behälter 7 entnommen werden kann. Die auf dem Sieb 10 befindlichen angesammelten Festkörper können dann mühelos entfernt werden.

In einer bevorzugten Ausführungsform sind das Filtergehäuse 1 sowie der Kantenspaltfilterkörper 2 rund ausgebildet. Der Behälter 7 besitzt vorzugsweise an beiden Enden Öffnungen 8. Durch diese bevorzugte Maßnahme wird erreicht, daß bei Reinigung des Kantenspaltfilters die Verunreinigungen von einer Seite des Behälters auf die andere Seite des Behälters geschoben werden können. Hierdurch ist eine bessere Reinigung des Systems möglich.

Es ist weiterhin bevorzugt, daß der Kantenspaltfilter 2 um seine eigene Längsachse drehbar angeordnet ist. Als Reinigungselement 6 wird bevorzugt ein Schaber eingesetzt. Auch das Reinigungselement kann drehbar angeordnet sein.

Die nachfolgenden Figuren sollen die Erfindung näher erläutern.
- Fig. 1: zeigt eine Seitenansicht einer Ausführungsform des erfindungsgemäßen Kantenspaltfilters.
- Fig. 2: zeigt einen Querschnitt des unteren Teils des Filtergehäuses 1 mit einem Behälter 7, in einer Ausführungsform als querliegendes Rohr.

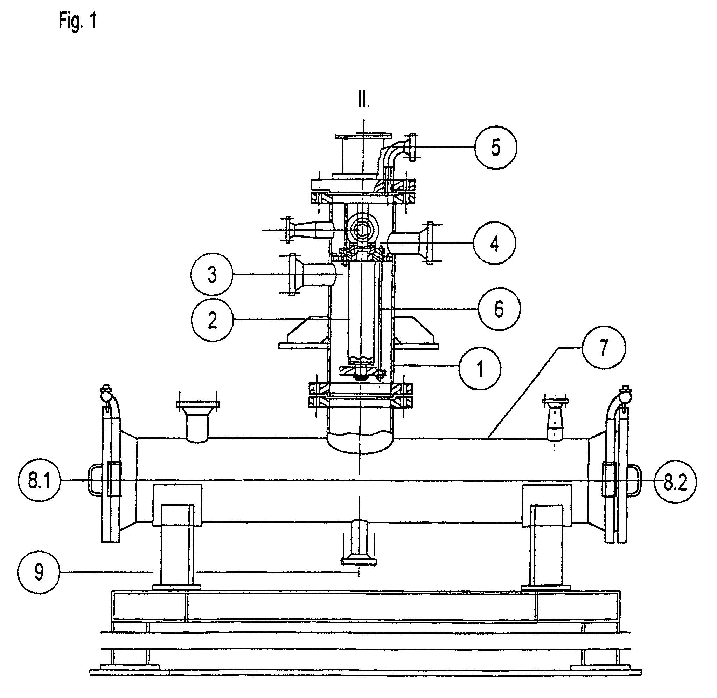

Figur 1 zeigt einen Kantenspaltfilter, wie er beispielsweise in einer Anlage zur Herstellung von Olefinen verwendet wird. Mit Hilfe dieses Kantenspaltfilters werden dort die anfallenden Quenchöle gereinigt. Diese enthalten als feste Bestandteile beispielsweise Kokspartikel sowie andere beim Cracken anfallende feste Kohlenwasserstoffe. Zur Filtration ist das Filtergehäuse 1 vollständig mit Quenchöl gefüllt. Das Quenchöl tritt durch den Eintrittsstutzen 3 in das Filtergehäuse ein. Es wird dann mittels Druck durch den Kantenspaltfilterkörper 2 geführt und tritt durch den Austrittsstutzen 4 in filtrierter Form wieder in den Quenchölkreislauf ein. Der Kantenspaltfilterkörper 2 ist um seine Längsachse drehbar angeordnet und besitzt ein Reinigungselement 6. Zur Reinigung wird der Kantenspaltfilterkörper um seine Längsachse gedreht, wobei mittels des Reinigungselementes die außen auf dem Kantenspaltfilter liegenden Verunreinigungen abgeschabt werden.

Diese Verunreinigungen fallen durch das äußere Filtergehäuse 1 nach unten in den Behälter 7 und sammeln sich dort an. Zur Reinigung des Kantenspaltfilters werden die bei Betrieb verschlossenen Entleerungsöffnungen 8 geöffnet und die im Behälter 7 angesammelten Verunreinigungen entsorgt.

Mit einer derartigen Anordnung werden je nach Größe und Auffangvolumen erhebliche längere Standzeiten erreicht. Weiterhin ist die Reinigung erheblich vereinfacht.

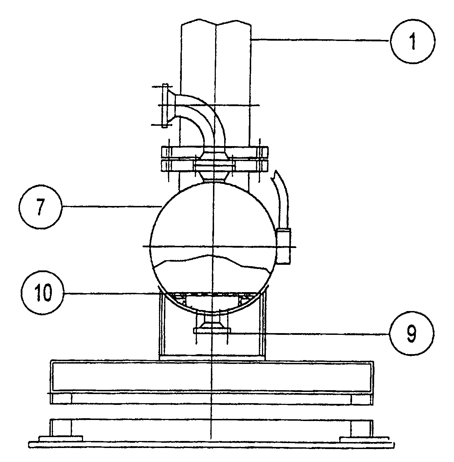

Figur 2 zeigt einen Querschnitt des unteren Teils des Filtergehäuses 1 und des Behälters 7 entlang der Linie II in Figur 1. Die Ziffer 10 zeigt das im Behälter 7 angeordnete Sieb 10, das bevorzugt eine Maschenweite besitzt, die dem des Kantenspaltfilterkörpers entspricht oder feiner als diese ist. Durch dieses Sieb 10 wird verhindert, daß die sedimentierten Feststoffe, in der Figur 2 angedeutet, den Slop 9 verstopfen. Gleichzeitig werden beim Ablassen der Flüssigkeit durch Slop 9 bereits sedimentierte Feststoffe von der Flüssigphase getrennt.

Die Reinigung des Behälters erfolgt durch Schließen des Eintrittsstutzens 3 und des Austrittsstutzens 4. Danach werden die Entleerungsdeckel 8 geöffnet und die Verunreinigungen aus dem Behälter 7 entnommen.

Der erfindungsgemäße Kantenspaltfilter wird zur Entfernung von Feststoffen aus Flüssigkeiten, insbesondere aus Quenchölen eingesetzt.

### Bezugszeichenliste

- 1: äußeres Filtergehäuse
- 2: Kantenspaltfilterkörper
- 3: Eintrittsstutzen
- 4: Ausstrittsstutzen
- 5: Entlüftungsstutzen
- 6: Reinigungselement
- 7: Behälter
- 8.1, 8.2: Entleerungsöffnungen
- 9: Slop
- 10: Sieb

## Patentansprüche

1. Kantenspaltfilter zur Entfernung von Feststoffen aus Flüssigkeiten mit einem Filtergehäuse (1), in dem ein Kantenspaltfilterkörper (2) angeordnet ist, mindestens einem Eintrittsstutzen (3) und mindestens einem Austrittsstutzen (4), wobei an der Außenfläche oder Innenfläche des Kantenspaltfilterkörpers (2) ein Reinigungselement (6) angeordnet ist zur Entfernung abgelagerter Verunreinigungen, **dadurch gekennzeichnet, daß** der untere Teil des Filtergehäuses (1) in geradem Verlauf in einen quer zum Filtergehäuse angeordneten langgestreckten Behälter (7) mündet,der an mindestens einem Ende eine Entleerungsöffnung (8) aufweist und wobei über dem Slop (9) ein Sieb (10) angeordnet ist.

2. Kantenspaltfilter nach Anspruch 1, **dadurch gekennzeichnet, daß** das Sieb (10) dieselbe Maschenweite oder eine feinere Maschenweite besitzt wie der Kantenspaltfilterkörper (2).

3. Kantenspaltfilter nach den Ansprüche 1 oder 2, **dadurch gekennzeichnet, daß** das Sieb (10) in dem Behälter (7) demontierbar angeordnet ist.

4. Kantenspaltfilter nach den Ansprüchen 1 bis 3, **dadurch gekennzeichnet, daß** das Filtergehäuse (1) rund ist.

5. Kantenspaltfilter nach den Ansprüchen 1 bis 4, **dadurch gekennzeichnet, daß** der Kantenspaltfilterkörper (2) rund ist.

6. Kantenspaltfilter nach den Ansprüchen 1 bis 5, **dadurch gekennzeichnet, daß** der Behälter (7) an beiden Enden verschließbare Entleerungsöffnungen (8) aufweist.

7. Kantenspaltfilter nach den Ansprüchen 1 bis 6, **dadurch gekennzeichnet, daß** der Kantenspaltfilterkörper (2) um seine Längsachse drehbar angeordnet ist.

8. Kantenspaltfilterkörper nach den Ansprüchen 1 bis 7, **dadurch gekennzeichnet, daß** das Reinigungselement (6) ein Schaber ist.

9. Kantenspaltfilterkörper nach den Ansprüchen 1 bis 8, **dadurch gekennzeichnet, daß** das Reinigungselement (6) drehbar angeordnet ist.

10. Verwendung des Kantenspaltfilters nach den Ansprüchen 1 bis 9 zur Entfernung von Feststoffen aus Flüssigkeiten, insbesondere Quenchölen.

## Claims

1. Edge filter for the removal of solid materials from liquids with a filter housing (1), in which an edge filter body (2) is arranged, at least one inlet pipe fitting (3) and at least one outlet pipe fitting (4), a cleaning element (6) for the removal of deposited impurities being arranged on the external or internal surface of the edge filter body (2), **characterised in that** the lower part of the filter housing (1) merges in a straight course with an elongated container (7) arranged transversely to the filter housing, which has an emptying opening (8) at at least one end and a screen (10) being arranged above the slop (9).

2. Edge filter according to Claim 1, **characterised in that** the screen (10) has the same mesh width as or a finer mesh width than the edge filter body (2).

3. Edge filter according to Claims 1 or 2, **characterised in that** the screen (10) is arranged in the container (7) so that it can be dismantled.

4. Edge filter according to Claims 1 to 3, **characterised in that** the filter housing (1) is round.

5. Edge filter according to Claims 1 to 4, **characterised in that** the edge filter body (2) is round.

6. Edge filter according to Claims 1 to 5, **characterised in that** the container (7) has closable emptying openings (8) at both ends.

7. Edge filter according to Claims 1 to 6, **characterised in that** the edge filter body (2) is arranged so that it can be rotated about its longitudinal axis.

8. Edge filter body according to Claims 1 to 7, **characterised in that** the cleaning element (6) is a scraper.

9. Edge filter body according to Claims 1 to 8, **characterised in that** the cleaning element (6) is arranged so that it can be rotated.

10. Use of the edge filter according to Claims 1 to 9 for the removal of solid materials from liquids, in particular quench oils.

## Revendications

1. Filtre à arêtes à discontinuité pour éliminer des matières solides dans des liquides, avec un boîtier de filtre (1) dans lequel est placé un corps de filtre à arêtes à discontinuité (2), au moins un raccord d'entrée (3) et au moins un raccord de sortie (4), un élément de nettoyage pour éliminer les impuretés déposées étant placé sur la surface extérieure ou sur la surface intérieure du corps de filtre à arêtes à discontinuité (2),
**caractérisé en ce que**
la partie inférieure du boîtier de filtre (1) débouche en extension droite dans un récipient (7) allongé, placé en travers par rapport au boîtier de filtre, et qui présente à au moins une extrémité une ouverture de vidange (8), avec un tamis (10) étant placé au-dessus de la cuvette (9).

2. Filtre à arêtes à discontinuité selon la revendication 1,
**caractérisé en ce que**
le tamis (10) possède la même ouverture de maille ou une ouverture de maille plus fine que le corps de filtre à arêtes à discontinuité (2).

3. Filtre à arêtes à discontinuité selon les revendications 1 ou 2,
**caractérisé en ce que**
le tamis (10) est placé de façon démontable dans le récipient (7).

4. Filtre à arêtes à discontinuité selon les revendications 1 à 3,
**caractérisé en ce que**
le boîtier de filtre (1) est rond.

5. Filtre à arêtes à discontinuité selon les revendications 1 à 4
**caractérisé en ce que**
le corps de filtre à arêtes à discontinuité (2) est rond.

6. Filtre à arêtes à discontinuité selon les revendications 1 à 5,
**caractérisé en ce que**
le récipient (7) présente aux deux extrémités des ouvertures de vidange (8) qu'on peut fermer.

7. Filtre à arêtes à discontinuité selon les revendications 1 à 6,
**caractérisé en ce que**
le corps de filtre à arêtes à discontinuité (2) est disposé de façon à tourner autour de son axe longitudinal.

8. Filtre à arêtes à discontinuité selon les revendications 1 à 7,
caractêrlsé en ce que
l'élément de nettoyage (6) est un racloir.

9. Filtre à arêtes à discontinuité selon les revendications 1 à 8,
**caractérisé en ce que**
l'élément de nettoyage (6) est placé de façon à pouvoir tourner.

10. Utilisation du filtre à arêtes à discontinuité selon les revendications 1 à 9,
pour éliminer des matières solides dans des liquides, en particulier dans des huiles de trempe.
